# EUROPÄISCHE PATENTSCHRIFT

(11) **EP 2 663 746 B1**
(45) Veröffentlichungstag und Bekanntmachung des Hinweises auf die Patenterteilung: **30.09.2015**
(21) Anmeldenummer: 12700177.4
(22) Anmeldetag: 11.01.2012
(51) Int. Cl.: F01N 3/021, F01N 3/28

(54) **ABGASBEHANDLUNGSEINRICHTUNG**
EXHAUST-GAS TREATMENT DEVICE
DISPOSITIF DE TRAITEMENT DE GAZ D'ÉCHAPPEMENT

(30) Priorität: 14.01.2011 DE 102011002681
(43) Veröffentlichungstag der Anmeldung: 20.11.2013
(73) Patentinhaber: Eberspächer Exhaust Technology GmbH & Co. KG, 66539 Neunkirchen (DE)
(72) Erfinder: WIRTH, Georg, 73230 Kirchheim/Teck (DE)
(74) Vertreter: BRP Renaud & Partner mbB Rechtsanwälte Patentanwälte Steuerberater
(86) Internationale Anmeldenummer: PCT/EP2012/050342
(87) Internationale Veröffentlichungsnummer: WO 2012/095442

(56) Entgegenhaltungen:
- EP-A1- 2 151 551
- FR-A1- 2 261 415
- US-A1- 2009 060 800

## Beschreibung

Die vorliegende Erfindung betrifft eine Abgasbehandlungseinrichtung für eine Abgasanlage einer Brennkraftmaschine, insbesondere eines Kraftfahrzeugs, mit den Merkmalen des Oberbegriffs des Anspruchs 1.

Üblicherweise umfasst eine Abgasbehandlungseinrichtung, wie z. Bsp. ein Partikelfilter oder ein Katalysator, ein Gehäuse, dessen Mantel einen Aufnahmeraum in Umfangsrichtung umschließt, wobei im Aufnahmeraum zumindest ein Abgasbehandlungselement angeordnet ist, bei dem es sich bspw. um ein Partikeifilterelement oder um ein Katalysatorelement handeln kann. Derartige Abgasbehandlungselemente können bspw. einen keramischen Grundkörper aufweisen, der insbesondere eine monolithische Struktur besitzen kann. Derartige keramische Abgasbehandlungselemente sind vergleichsweise empfindlich gegen Stoßbelastungen und müssen daher stoßdämpfend im Gehäuse bzw. im Mantel gelagert werden. Dementsprechend umfasst eine übliche Abgasbehandlungseinrichtung außerdem eine Lagerschicht aus einem elastischen Lagermaterial, die das jeweilige Abgasbehandlungselement in der Umfangsrichtung umschließt.

Da eine derartige Lagerschicht bei herkömmlicher Bauweise außerdem zur Lagefixierung des jeweiligen Abgasbehandlungselements im Gehäuse dient, werden das jeweilige Abgasbehandlungselement und der Gehäusemantel mit dazwischen angeordneter Lagerschicht verpresst. Die hierbei verwendeten Lagermaterialien sind so gewählt, dass eine gewünschte Haltekraft und die Dämpfungswirkung für das jeweilige Abgasbehandlungselement im ganzen üblichen Temperaturbereich der Abgasbehandlungseinrichtung gewährleistet werden können. Dabei muss die Lagerschicht stark unterschiedliche Temperaturausdehnungskoeffizienten einerseits des metallischen Mantels und andererseits des keramischen Abgasbehandlungselements ausgleichen.

Bei modernen Abgasbehandlungseinrichtungen kann außerdem eine thermische Isolation vorgesehen sein, die das Gehäuse bzw. den Mantel an einer Außenseite umschließt, um die thermische Belastung der Umgebung zu reduzieren. Eine derartige Bauweise ist jedoch in mehrfacher Hinsicht nachteilig. Zum einen muss die außen am Mantel angeordnete Isolation fixiert werden, was bspw. mit einer weiteren metallischen Hülle realisierbar ist, die den Mantel umschließt. Diese Bauweise ist vergleichsweise aufwendig und teuer. Zum anderen ergeben sich für den radial zwischen der Isolation und der Lagerschicht angeordneten Mantel höhere Temperaturen, da die außenliegende Isolation eine Abkühlung des Mantels verhindert. Diese höheren Temperaturen im Mantel führen zu größeren thermisch bedingten Relativbewegungen zwischen dem Mantel und dem jeweiligen Abgasbehandlungselement, wodurch die Lagerung des jeweiligen Abgasbehandlungselements geschwächt wird. Gleichzeitig ergibt sich für den Mantel eine höhere Korrosionsbelastung. Um dem abzuhelfen, kann für den Mantel ein teureres Material verwendet werden, das eine höhere Korrosionsbeständigkeit und/oder einen geringeren Temperaturausdehnungskoeffizienten aufweist.

Aus der DE 10 2008 048 314 A1 ist eine Abgasbehandlungseinrichtung für eine Abgasanlage einer Brennkraftmaschine bekannt, deren Gehäuse einen innenliegenden Mantel, der einen Aufnahmeraum in Umfangsrichtung umschließt, und einen außenliegenden Mantel aufweist, der den innenliegenden Mantel und somit ebenfalls den Aufnahmeraum in der Umfangsrichtung umschließt. Ferner umfasst die Abgasbehandlungseinrichtung ein Abgasbehandlungselement, das im Aufnahmeraum angeordnet ist, sowie eine Lagerschicht aus einem elastischen Lagermaterial, die das Abgasbehandlungselement in der Umfangsrichtung umschließt, radial mit einer Druckkraft daran anliegt und diese Druckkraft auf den innenliegenden Mantel überträgt. Hierdurch ist das Abgasbehandlungselement relativ zum innenliegenden Mantel lagefixiert. Des Weiteren besitzt die bekannte Abgasbehandlungseinrichtung eine Isolationsschicht aus einem thermisch isolierenden Isolationsmaterial, welche den innenliegenden Mantel und somit auch die Lagerschicht und das Abgasbehandlungselement in der Umfangsrichtung innerhalb des außenliegenden Mantels umschließt. Die Isolationsschicht liegt dabei am außenliegenden Mantel an und ist über Stege am innenliegenden Mantel abgestützt, um diesen so im außenliegenden Mantel zu positionieren. Darüber hinaus ist die bekannte Abgasbehandlungseinrichtung mit einer Metallfolie ausgestattet, die radial zwischen der Lagerschicht und dem innenliegenden Mantel angeordnet ist.

Eine gattungsgemäße Abgasbehandlungseinrichtung ist aus der US 2009/0 060 800 A1 bekannt.

Weitere Abgasbehandlungseinrichtung sind aus der FR 2 261 415 A1 und EP 2 151 551 A1 bekannt.

Die vorliegende Erfindung beschäftigt sich mit dem Problem, für eine Abgasbehandlungseinrichtung der eingangs genannten Art eine verbesserte Ausführungsform anzugeben, die sich insbesondere dadurch charakterisiert, dass bei ausreichender thermischer Isolation eine vergleichsweise preiswerte Realisierbarkeit erreicht werden kann.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, eine Isolationsschicht radial zwischen der Lagerschicht und dem Mantel anzuordnen, so dass die Isolationsschicht die Lagerschicht in der Umfangsrichtung umschließt und insbesondere direkt oder indirekt am Mantel anliegt. Wichtig ist dabei, dass die Isolationsschicht aus einem thermisch isolierenden und druckfesten Isolationsmaterial besteht. Durch die Verwendung eines druckfesten Isolationsmaterials ist es möglich, die zum Fixieren des wenigstens einen Abgasbehandlungselements relativ zum Mantel erforderlichen, radial orientierten Druckkräfte, die von der Lagerschicht auf das wenigstens eine Abgasbehandlungselement eingeleitet werden, zwischen dem Mantel und der Lagerschicht zu übertragen. Die von der Lagerschicht in das wenigstens eine Abgasbehandlungselement eingeleiteten Druckkräfte werden dadurch von der direkt oder indirekt an der Lagerschicht anliegenden Isolationsschicht auf den Mantel übertragen. Die Isolationsschicht ist bei den auftretenden thermisch bedingten Relativbewegungen zwischen dem Mantel und dem jeweiligen Abgasbehandlungselement, die zu einer Veränderung der radial gemessenen Spaltweite des zwischen dem jeweiligen Abgasbehandlungselement und dem Mantel ausgebildeten Ringspalts führen und dementsprechend mit einer Veränderung der Druckbelastung der in diesem Ringspalt angeordneten Lagerschicht und Isolationsschicht einhergehen, aufgrund ihrer Druckstabilität im Wesentlichen keiner Formänderung ausgesetzt, sondern bleibt formstabil. Im Unterschied zum elastischen Lagermaterial verändert das druckfeste Isolationsmaterial bei den üblicherweise auftretenden Drücken somit seine Form nicht bzw. nicht wesentlich. Somit führt die im Betrieb auftretende Spaltänderung im Wesentlichen ausschließlich zu einer Deformation der Lagerschicht, deren Lagermaterial in üblicher Weise speziell so ausgewählt ist, dass es derartige Spaltänderungen elastisch aufnehmen kann. Die Erfindung schlägt somit eine funktionale Trennung zwischen der thermischen Isolation mit Druckabstützung am Mantel einerseits mittels der Isolationsschicht und der elastischen Fixierung des jeweiligen Abgasbehandlungselements mit Kompensation der thermisch bedingten Dehnungseffekten andererseits mittels der Lagerschicht vor. Somit lassen sich nachteilige Wechselwirkungen einer elastischen thermischen Isolierung vermeiden.

Das teure Lagermaterial charakterisiert sich gegenüber einem herkömmlichen, nicht-druckfesten Isolationsmaterial, das bspw. aus einer Fasermatte bestehen kann, dadurch, dass die Deformation des Lagermaterials weitgehend elastisch erfolgt, während eine vergleichbare Deformation eines herkömmlichen faserigen Isolationsmaterials zumindest teilweise plastisch erfolgt. Somit scheidet die Verwendung eines herkömmlichen, nicht-druckfesten Lagermaterials im Ringspalt aus, da sich die zur Lagefixierung des jeweiligen Abgasbehandlungselements erforderliche radiale Verspannung zwischen dem jeweiligen Abgasbehandlungselement und dem Mantel im Rahmen einer Spaltänderung deutlich und dauerhaft reduziert.

Durch die erfindungsgemäß vorgeschlagene Verwendung eines druckfesten Isolationsmaterials können diese Nachteile vermieden werden. Spaltänderungen werden im Wesentlichen ausschließlich vom Lagermaterial kompensiert, und zwar weitgehend elastisch, so dass es zu keiner kritischen Reduzierung der Vorspannung kommt. Hierdurch ist es möglich, die Temperatur des Mantels zu reduzieren, so dass für den Mantel auch preiswertere Materialien verwendet werden können.

Die Isolationsschicht kann entweder indirekt über eine, insbesondere biegeweiche, Zwischenschicht oder direkt an der Lagerschicht abgestützt sein. Die Zwischenschicht kann beispielsweise eine, vorzugsweise biegeweiche, Dampfsperrschicht sein.

Zusätzlich oder alternativ kann die Isolationsschicht entweder indirekt über eine, insbesondere biegeweiche, Zwischenschicht oder direkt am Mantel abgestützt sein. Die Zwischenschicht kann beispielsweise eine, vorzugsweise biegeweiche, Dampfsperrschicht sein.

Entsprechend einer vorteilhaften Ausführungsform kann radial zwischen Lagerschicht und Isolationsschicht eine Dampfsperrschicht angeordnet sein, welche die Lagerschicht in der Umfangsrichtung umschließt und radial sowohl an der Lagerschicht als auch an der Isolationsschicht anliegt. Mit Hilfe einer derartigen Dampfsperrschicht kann die Isolationsschicht bspw. vor Feuchtigkeit geschützt werden, zu der es in der Abgasbehandlungseinrichtung durch Kondensation kommen kann. Derartiges Kondensat entsteht insbesondere während einer Kaltstartphase der Abgasanlage, wenn im Abgas mitgeführter Wasserdampf an kalten Oberflächen der Abgasanlage, insbesondere innerhalb einer solchen Abgasbehandlungseinrichtung kondensiert. Durch die Verwendung einer derartigen, vorzugsweise biegeweichen, Dampfsperrschicht ist es zum Beispiel möglich, ein gegenüber Dampf bzw. Feuchtigkeit empfindliches Isolationsmaterial zu verwenden.

Entsprechend einer anderen vorteilhaften Ausführungsform kann radial zwischen Isolationsschicht und Mantel eine Dampfsperrschicht angeordnet sein, welche die Isolationsschicht in der Umfangsrichtung umschließt und über welche die Isolationsschicht am Mantel radial anliegt. Während die zuvor genannte Dampfsperrschicht die Isolationsschicht gegenüber der Lagerschicht vor Wasserdampf schützt, schützt die jetzt vorgestellte Dampfsperrschicht die Isolationsschicht gegenüber dem Mantel vor Wasserdampf. Beispielsweise kann durch die Verwendung einer solchen, vorzugsweise biegeweichen, Dampfsperrschicht, die Korrosionsgefahr für den Mantel reduziert werden, so dass es grundsätzlich möglich ist, für den Mantel ein preiswerteres Material und/oder eine reduzierte Wandstärke zu verwenden.

Grundsätzlich kann die Isolationsschicht sowohl radial innen als auch radial außen jeweils mit einer derartigen Dampfsperrschicht versehen sein. Ferner ist es möglich, die Isolationsschicht komplett mit einer derartigen Dampfsperrschicht zu umhüllen, und zwar radial innen und außen sowie axial.

Bei der jeweiligen Dampfsperrschicht kann es sich bspw. um eine vergleichsweise dünne Metallfolie handeln, die eine Wandstärke von 0,05 mm bis 0,1 mm oder bis 0,2 mm aufweisen kann. Beispielsweise eignet sich hierzu eine Leichtmetaltfolie, insbesondere eine Aluminiumfolie, oder eine Stahlfolie, insbesondere eine Edelstahlfolie.

Entsprechend einer vorteilhaften Ausführungsform kann das Isolationsmaterial ein mikroporöser Feststoff sein. Derartige mikroporösen Feststoffe besitzen einerseits die erforderliche Druckfestigkeit und zeichnen sich andererseits durch eine relativ hohe thermische Isolationswirkung aus. Bei entsprechender Materialauswahl besitzen derartige mikroporöse Feststoffe auch eine ausreichend hohe Temperaturbeständigkeit. Weitere geeignete Feststoffe sind bspw. Feuerleichtsteine, z. Bsp. Kalziumsilikat. Ebenso kann als Isolationsmaterial Blähglimmer oder Vermiculit verwendet werden.

Erfindungsgemäß ist vorgesehen, dass die Isolationsschicht in der Umfangsrichtung segmentiert ist und mehrere Isolationskörper aufweist, die in der Umfangsrichtung aufeinander folgen und sich jeweils über einen Umfangsabschnitt erstrecken. Die Verwendung derartiger Isolationskörper in Form von Umfangsabschnitten der Isolationsschicht vereinfacht die Montage bzw. die Anbringung der Isolationsschicht auf der Lagerschicht.

Zweckmäßig können sich die in der Umfangsrichtung benachbarten Isolationskörper in der Umfangsrichtung gegenseitig radial überlappen. Hierdurch kann eine radiale Leckage von Abgas und/oder Wärme reduziert werden. Die benachbarten Isolationskörper greifen dabei nach Art des Nut-Feder-Prinzips ineinander.

Bei einer weiteren Ausführungsform können die Isolationskörper in ihrer Axialerstreckung jeweils zumindest eine Umfangsstufe aufweisen, wobei sich die in der Umfangsrichtung benachbarten Isolationskörper mit diesen Umfangsstufen in der Umfangsrichtung axial überlappen. Auf diese Weise kann eine axiale Leckage von Abgas vermieden werden. Außerdem sorgt die Überlappung in der Umfangsrichtung zwischen benachbarten Isolationskörpern zu einer Stabilisierung der Isolationsschicht.

Sofern eine die Isolationsschicht vollständig umschließende Dampfsperrschicht vorhanden ist, kann es zweckmäßig sein, die Isolationskörper einzeln für sich in einer derartigen Dampfsperrschicht einzuschließen.

Bei einer anderen Ausführungsform kann die Isolationsschicht oder wenigstens einer der Isolationskörper am Mantel axial und/oder in Umfangsrichtung fixiert sein. Auf diese Weise kann sich der Zusammenbau der Abgasbehandlungseinrichtung vereinfachen, insbesondere das so genannte Canning, also das Einbringen des jeweiligen Abgasbehandlungselements in den Mantel. Hierzu wird einerseits der Mantel mit der Isolationsschicht versehen, während andererseits das jeweilige Abgasbehandlungselement mit der Lagerschicht versehen wird. Beim Zusammenbau erfolgt dann gleichzeitig die Verpressung der Lagerschicht.

Die Fixierung der Isolationskörper bzw. der Isolationsschicht am Mantel kann mit geeigneten Befestigungsmitteln realisiert werden, bspw. können Schrauben oder Nieten oder Klebverbindungen zum Einsatz kommen. Alternativ ist es ebenso möglich, reibschlüssige und/oder formschlüssige Fixierungen zwischen der Isolationsschicht bzw. den Isolationskörpern und dem Mantel zu erzeugen, bspw. mit Hilfe von geometrischen Unebenheiten, wie z. Bsp. Dellen, Sicken oder Absätzen.

Entsprechend einer weiteren Ausführungsform kann an wenigstens einem Axialende der Isolationsschicht ein Schutzring angeordnet sein, der radial an der Lagerschicht sowie am Mantel und axial an der Isolationsschicht anliegt. Mit Hilfe eines derartigen Schutzrings kann die Isolationsschicht vor einer unmittelbaren Abgasbeaufschlagung geschützt werden. Insbesondere kann der Schutzring thermisch isolierend ausgestaltet sein. Zusätzlich oder alternativ kann der Schutzring als Dampfsperre konzipiert sein. Insbesondere kann der Schutzring aus Lagermaterial hergestellt sein. Alternativ ist es auch möglich, den Schutzring aus Drahtgestrick zu pressen, wobei optional eine Keramikfaserfüllung vorgesehen sein kann.

Entsprechend einer weiteren Ausführungsform kann der Mantel zumindest eine Ringstufe aufweisen, die einen insbesondere ringförmigen Isolationsraum axial begrenzt und radial an der Lagerschicht anliegt, wobei die Isolationsschicht in diesem Isolationsraum angeordnet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 und 2: jeweils einen stark vereinfachten, prinzipiellen halben Längsschnitt einer Abgasbehandlungseinrichtung bei verschiedenen Ausführungsformen,
- Fig. 3: einen Querschnitt einer solchen Abgasbehandlungseinrichtung,
- Fig. 4: eine Seitenansicht einer solchen Abgasbehandlungseinrichtung bei weggelassenem Gehäuse,
- Fig. 5: einen vereinfachten Querschnitt eines Schutzrings.

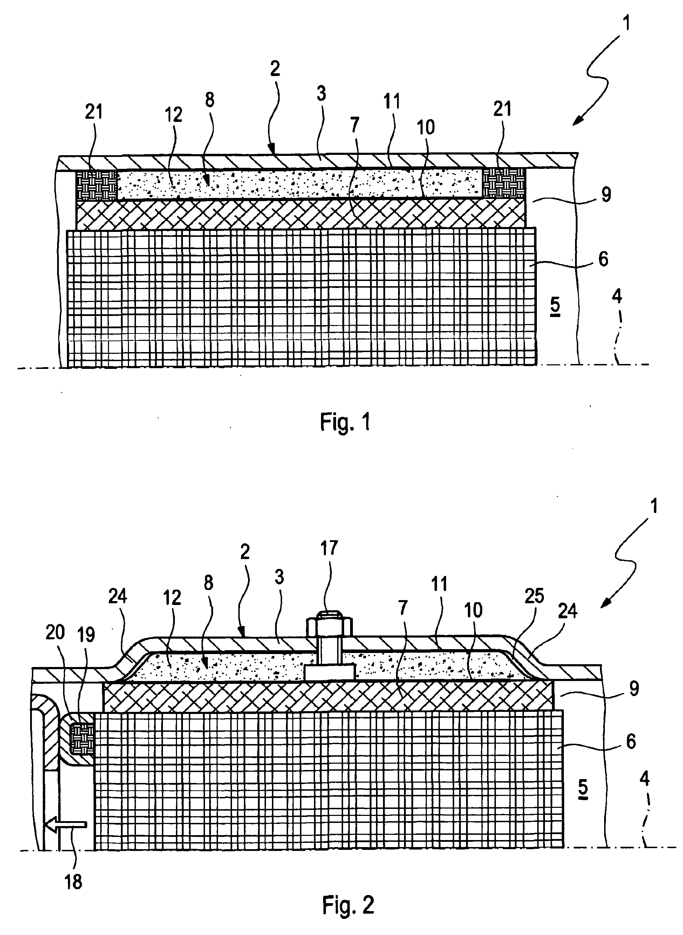

Entsprechend den Fig. 1 bis 4 umfasst eine Abgasbehandlungseinrichtung 1, die bei einer Abgasanlage einer Brennkraftmaschine, insbesondere eines Kraftfahrzeugs, verwendet werden kann, ein Gehäuse 2, das einen Mantel 3 aufweist, der sich bezüglich einer Längsmittelachse 4 in einer Umfangsrichtung erstreckt und dadurch einen Aufnahmeraum 5 in der Umfangsrichtung umschließt. Ferner umfasst die Abgasbehandlungseinrichtung 1 zumindest ein Abgasbehandlungselement 6, das im Aufnahmeraum 5 angeordnet ist. Das jeweilige Abgasbehandlungselement 6 kann bspw. aus einem keramischen Werkstoff hergestellt sein. Insbesondere kann es sich beim Abgasbehandlungselement 6 um einen keramischen Monolithen handeln. Sofern die Abgasbehandlungseinrichtung 1 als Partikelfilter ausgestaltet ist, handelt es sich beim Abgasbehandlungselement 6 um ein Partikelfilterelement. Sofern die Abgasbehandlungseinrichtung 1 als Katalysator ausgestaltet ist, handelt es sich beim Abgasbehandlungselement 6 um ein Katalysatorelement. Grundsätzlich kann die Abgasbehandlungseinrichtung 1 mehrere Abgasbehandlungselemente 6 enthalten, die auch unterschiedlich konzipiert sein können. So lassen sich insbesondere in einem gemeinsamen Gehäuse ein Hydrolysekatalysator, ein SCR-Katalysator und ein Oxidationskatalysator anordnen.

Zur Lagerung des jeweiligen Abgasbehandlungselements 6 im Mantel 3 umfasst die Abgasbehandlungseinrichtung 1 außerdem eine Lagerschicht 7 aus einem elastischen Lagermaterial. Die Lagerschicht 7 umschließt das jeweilige Abgasbehandlungselement 6 in der Umfangsrichtung und liegt radial am Abgasbehandlungselement 6 an. Um die Außentemperatur des Gehäuses 2, insbesondere am Mantel 3 zu reduzieren, ist die hier vorgestellte Abgasbehandlungseinrichtung 1 außerdem mit einer Isolationsschicht 8 ausgestattet, die aus einem thermisch isolierenden, druckfesten Isolationsmaterial gebildet ist. Die Isolationsschicht 8 umschließt in der Umfangsrichtung die Lagerschicht 7 und kommt am Mantel 3 radial direkt oder indirekt zur Anlage. Radial zwischen Abgasbehandlungselement 6 und Mantel 3 ist ein sich in der Umfangsrichtung erstreckender Ringspalt 9 vorgesehen, der durch die Lagerschicht 7 und die Isolationsschicht 8 gemeinsam ausgefüllt ist.

Besonders zweckmäßig kann radial zwischen Lagerschicht 7 und Isolationsschicht 8 eine Dampfsperrschicht 10 angeordnet sein. Diese Dampfsperrschicht 10 umschließt die Lagerschicht 7 in der Umfangsrichtung. Sie liegt radial sowohl an der Lagerschicht 7 als auch an der Isolationsschicht 8 an. Zusätzlich oder alternativ zu dieser Dampfsperrschicht 10 kann auch radial zwischen der Isolationsschicht 8 und dem Mantel 3 eine Dampfsperrschicht 11 angeordnet sein. Die beiden Dampfsperrschichten 10, 11, die kumulativ oder alternativ vorhanden sein können, werden im folgenden auch als innere Dampfsperrschicht 10 und äußere Dampfsperrschicht 11 bezeichnet, da die innere Dampfsperrschicht 10 radial innen an der Isolationsschicht 8 angeordnet ist, während die äußere Dampfsperrschicht 10 radial außen an der Isolationsschicht 8 angeordnet ist. Die äußere Dampfsperrschicht 11 umschließt die Isolationsschicht 8 in der Umfangsrichtung und liegt radial sowohl am Mantel 3 als auch an der Isolationsschicht 8 direkt an. Ebenso ist es grundsätzlich möglich, die Isolationsschicht 8 radial innen und radial außen sowie axial beiderseits mit einer derartigen Dampfsperre zu versehen.

Beim Isolationsmaterial, aus dem die Isolationsschicht 8 hergestellt ist, handelt es sich bevorzugt um einen mikroporösen Feststoff oder um Blähglimmer. Thermisch isolierende und hitzebeständige, leichte Feststoffe finden sich bspw. im Ofenbau oder bei Kühlanlagen.

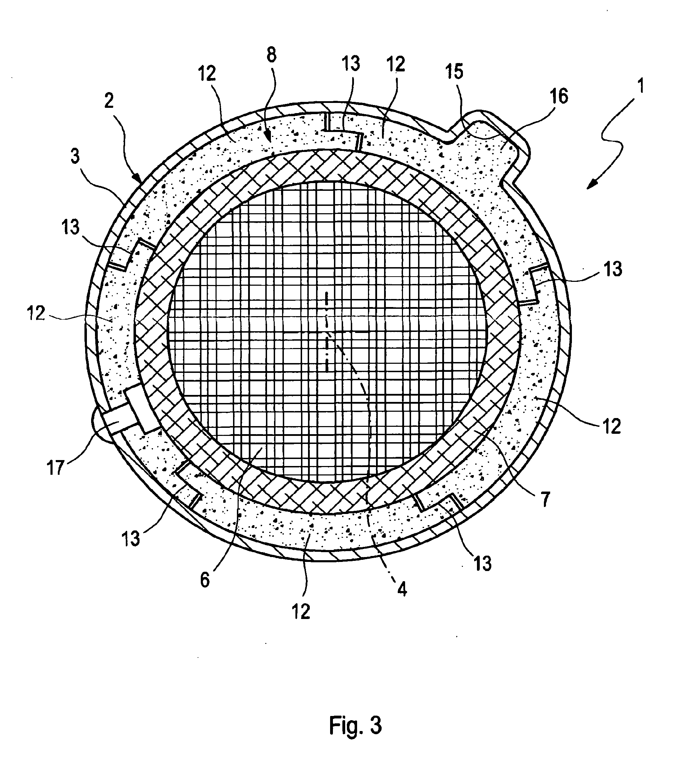

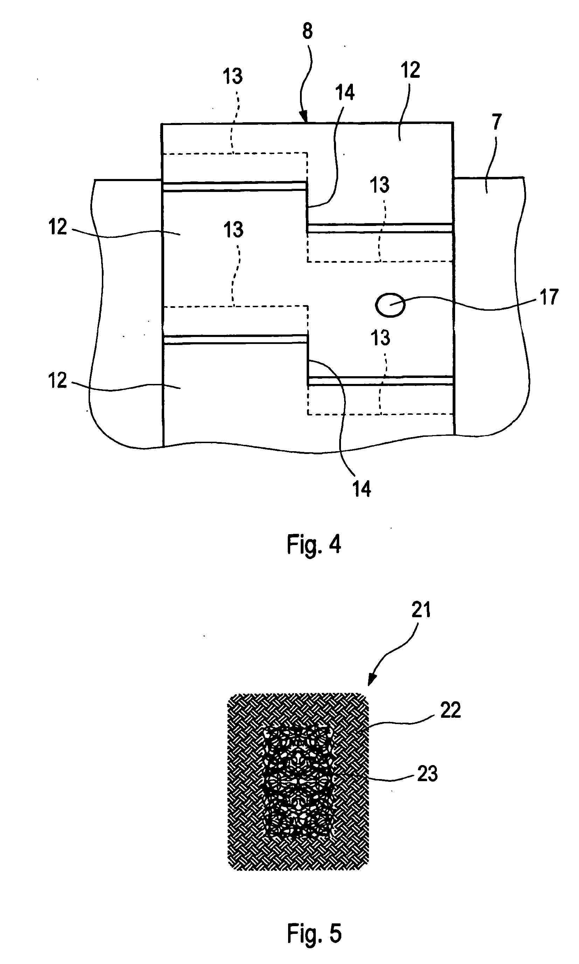

Wie den Fig. 3 und 4 entnehmbar ist, kann die Isolationsschicht 8 entsprechend einer vorteilhaften Ausführungsform aus mehreren Isolationskörpern 12 bestehen, die in der Umfangsrichtung aufeinander folgen. Hierdurch ergibt sich eine umfangsmäßige Segmentierung der Isolationsschicht 8 in die einzelnen Isolationskörper 12. Gemäß Fig. 3 können die einzelnen Isolationskörper 12 an ihren Umfangsenden gestuft sein, derart, dass sich die in der Umfangsrichtung benachbarten Isolationskörper 12 in der Umfangsrichtung gegenseitig überlappen. Entsprechende Überlappungsbereiche sind in Fig. 3 mit 13 bezeichnet. Hierdurch ergibt sich eine Kopplung nach Art des Nut-Feder-Prinzips.

Gemäß Fig. 4 können die Isolationskörper 12 in ihrer axialen Erstreckung zumindest eine Umfangsstufe 14 aufweisen. Diese Umfangsstufen 14 sind so aufeinander abgestimmt, dass sich die Isolationskörper 12, die in der Umfangsrichtung benachbart sind, mit diesen Umfangsstufen 14 in der Umfangsrichtung überlappen. In Fig. 4 deutet eine unterbrochene Linie die Überlappungsbereiche 13 aus Fig. 3 an, so dass die Umfangsstufen 14 mit diesen Überlappungsbereichen 13 kombinierbar sind.

Die Isolationsschicht 8 bzw. die einzelnen Isolationskörper 12 können am Mantel 3 fixiert sein und zwar axial und/oder in Umfangsrichtung. Derartige Fixierungen können bspw. mittels Formschluss realisiert werden. In Fig. 3 ist eine an der Innenseite des Mantels 3 ausgebildete Vertiefung 15 angedeutet, in welcher ein Vorsprung 16 radial eingreift, der an einem der Isolationskörper 12 an einer Außenseite ausgeformt ist. Hierdurch ergibt sich eine Fixierung zumindest in der Umfangsrichtung mittels Formschluss. Ebenso ist grundsätzlich eine Verklebung zwischen den Isolationskörpern 12 und dem Mantel 3 vorstellbar. Alternativ können auch Befestigurigshilfsmittel verwendet werden, wie z. Bsp. Schrauben 17 oder Nieten 17.

Um auch bei der segmentierten Isolationsschicht 8 eine Dampfsperre realisieren zu können, kann insbesondere vorgesehen sein, jeden Isolationskörper 12 vollständig mit einer Dampfsperrhülle hermetisch zu versiegeln. Alternativ kann es auch ausreichend sein, bezüglich der aus den Isolationskörpern 12 zusammengesetzten Isolationsschicht 8 eine innenliegende Dampfsperrschicht 10 und/oder eine außenliegende Dampfsperrschicht 11 anzuordnen.

Bei der in Fig. 2 gezeigten Ausführungsform ist wieder eine Verschraubung 17 zur Fixierung des jeweiligen Isolationskörpers 12 am Mantel 3 vorgesehen. In Fig. 2 ist außerdem durch einen Pfeil eine Strömungsrichtung einer Abgasströmung 18 angedeutet, die das Abgasbehandlungselement 6 im Betrieb der Abgasbehandlungseinrichtung 1 durchströmt. In dieser Richtung treibt die Abgasströmung 18 das Abgasbehandlungselement 6 an. Zur axialen Abstützung des Abgasbehandlungselements 6 kann ein Abstützring 19 vorgesehen sein, der sich axial am Abgasbehandlungselement 6 abstützt und in einer Fassung 20 relativ zum Gehäuse 2 fixiert ist.

Entsprechend Fig. 1 kann an den Axialenden der Isolationsschicht 8 jeweils ein Schutzring 21 vorgesehen sein. Der jeweilige Schutzring 21 liegt radial außen am Mantel 3, radial innen an der Lagerschicht 7 und axial an der Isolationsschicht 8 an. Der jeweilige Schutzring 21 ist zweckmäßig thermisch isolierend ausgestaltet. Er kann eine Dampfsperre beinhalten. Ferner kann er aus Lagermaterial hergestellt sein.

Besonders vorteilhaft ist jedoch eine in Fig. 5 gezeigte Ausführungsform, bei welcher der Schutzring 21 aus einem Drahtgestrick 22 mit Keramikfaserfüllung 23 gebildet ist, die miteinander verpresst sind. Das Drahtgestrick 22 besitzt die erforderliche Elastizität und die Keramikfaserfüllung 23 kann die gewünschte thermische Isolation erzeugen. Ebenso kann dadurch die gewünschte Dampfsperre erreicht werden.

Fig. 2 zeigt eine andere Ausführungsform, die ohne derartige Schutzringe 21 auskommt. Bei der in Fig. 2 gezeigten Ausführungsform besitzt der Mantel 3 zwei Ringstufen 24, die so dimensioniert sind, dass sie einen Isolationsraum 25 axial begrenzen, in dem die Isolationsschicht 8 angeordnet ist, und dass sie radial an der Lagerschicht 7 zur Anlage kommen.

## Patentansprüche

1. Abgasbehandlungseinrichtung für eine Abgasanlage einer Brennkraftmaschine, insbesondere eines Kraftfahrzeugs,
- mit einem Gehäuse (2), dessen Mantel (3) einen Aufnahmeraum (5) in Umfangsrichtung umschließt,
- mit mindestens einem Abgasbehandlungselement (6), das im Aufnahmeraum (5) angeordnet ist,
- mit einer Lagerschicht (7) aus einem elastischen Lagermaterial, die das wenigstens eine Abgasbehandlungselement (6) in der Umfangsrichtung umschließt und radial am wenigstens einen Abgasbehandlungselement (6) anliegt,
- mit einer Isolationsschicht (8) aus einem thermisch isolierenden, druckfesten Isolationsmaterial, welche die Lagerschicht (7) in der Umfangsrichtung innerhalb des Mantels (3) umschließt,
- wobei die Isolationsschicht (8) druckfest ausgestaltet ist und radial orientierte Druckkräfte zwischen Mantel (3) und Lagerschicht (7) überträgt, welche die Lagerschicht (7) auf das wenigstens eine Abgasbehandlungselement (6) einleitet,
**dadurch gekennzeichnet,**
**dass** die Isolationsschicht (8) mehrere Isolationskörper (12) aufweist, die in der Umfangsrichtung aufeinander folgen und sich jeweils über einen Umfangsabschnitt erstrecken.

2. Abgasbehandlungseinrichtung nach Anspruch 1,
**dadurch gekennzeichnet,**
**dass** die Isolationsschicht (8) entweder indirekt über eine biegeweiche Zwischenschicht (10) oder direkt an der Lagerschicht (7) abgestützt ist.

3. Abgasbehandlungseinrichtung nach Anspruch 1 oder 2,
**dadurch gekennzeichnet,**
**dass** die Isolationsschicht (8) entweder indirekt über eine biegeweiche Zwischenschicht (10) oder direkt am Mantel (3) abgestützt ist.

4. Abgasbehandlungseinrichtung nach einem der Ansprüche 1 bis 3,
**dadurch gekennzeichnet,**
**dass** radial zwischen Lagerschicht (7) und Isolationsschicht (8) eine Dampfsperrschicht (11) angeordnet ist, welche die Lagerschicht (7) in Umfangsrichtung umschließt und radial sowohl an der Lagerschicht (7) als auch an der Isolationsschicht (8) anliegt.

5. Abgasbehandlungseinrichtung nach einem der Ansprüche 1 bis 4,
**dadurch gekennzeichnet,**
**dass** radial zwischen der Isolationsschicht (8) und dem Mantel (3) eine Dampfsperrschicht (11) angeordnet ist, welche die Isolationsschicht (8) in Umfangsrichtung umschließt und über welche die Isolationsschicht (8) am Mantel (3) radial anliegt.

6. Abgasbehandlungseinrichtung nach einem der Ansprüche 1 bis 5,
**dadurch gekennzeichnet,**
**dass** das Isolationsmaterial ein mikroporöser Feststoff ist.

7. Abgasbehandlungseinrichtung nach einem der Ansprüche 1 bis 6,
**dadurch gekennzeichnet,**
**dass** sich die in der Umfangsrichtung benachbarten Isolationskörper (12) in der Umfangsrichtung gegenseitig überlappen.

8. Abgasbehandlungseinrichtung nach einem der Ansprüche 1 bis 7,
**dadurch gekennzeichnet,**
**dass** die Isolationskörper (12) in ihrer Axialerstreckung zumindest eine Umfangsstufe (14) aufweisen, wobei sich in der Umfangsrichtung benachbarte Isolationskörper (12) mit den Umfangsstufen (14) in der Umfangsrichtung überlappen.

9. Abgasbehandlungseinrichtung nach einem der Ansprüche 1 bis 8,
**dadurch gekennzeichnet,**
**dass** die Isolationsschicht (8) oder der jeweilige Isolationskörper (12) nach Anspruch 7 radial außen und innen mit einer Dampfsperrschicht umgeben ist.

10. Abgasbehandlungseinrichtung nach einem der Ansprüche 1 bis 9,
**dadurch gekennzeichnet,**
**dass** die Isolationsschicht (8) oder wenigstens einer der Isolationskörper (12) nach Anspruch 7 am Mantel (3) axial und/oder in Umfangsrichtung fixiert ist.

11. Abgasbehandlungseinrichtung nach einem der Ansprüche 1 bis 10,
**dadurch gekennzeichnet,**
**dass** an wenigstens einem Axialende der Isolationsschicht (8) ein Schutzring (21) angeordnet ist, der radial an der Lagerschicht (7) und am Mantel (3) und axial an der Isolationsschicht (8) anliegt.

12. Abgasbehandlungseinrichtung nach einem der Ansprüche 1 bis 11,
**dadurch gekennzeichnet,**
**dass** der Mantel (3) an wenigstens einem Axialende der Isolationsschicht (8) eine Ringstufe (24) aufweist, die radial an der Lagerschicht (7) anliegt.

## Claims

1. Exhaust gas treatment device for an exhaust gas system of an internal combustion engine, especially of a motor vehicle,
- comprising a housing (2), the casing (3) of which encloses a receiving space (5) in the circumferential direction,
- comprising at least one exhaust gas treatment element (6), which is arranged in the receiving space (5),
- comprising a bearing layer (7) which is made of resilient bearing material, encloses at least one exhaust gas treatment element (6) in the circumferential direction and rests on at least one exhaust gas treatment element (6)
- comprising an insulating layer (8) which is made of a thermally insulating, pressure-resistant insulating material and encloses the bearing layer (7) in the circumferential direction within the casing (3),
- the insulating layer (8) being designed such that it is pressure-resistant and transmitting radially oriented compressive forces between the casing (3) and bearing layer (7) which are introduced by the bearing layer (7) to the at least one exhaust gas treatment element (6),
**characterised in that**,
the insulating layer (8) contains a plurality of insulating bodies (12) which follow each other in the circumferential direction and extend across a circumferential portion in each case.

2. Exhaust gas treatment device according to claim 1,
**characterised in that**
the insulating layer (8) is supported on the bearing layer (7) either indirectly by means of a flexible intermediate layer (10) or directly.

3. Exhaust gas treatment device according to claim 1 or 2,
**characterised in that**
the insulating layer (8) is supported on the casing (3) either indirectly by means of a flexible intermediate layer (10) or directly.

4. Exhaust gas treatment device according to any of claims 1 to 3,
**characterised in that**
a vapour barrier layer (11) is arranged radially between the bearing layer (7) and insulating layer (8), which barrier layer encloses the bearing layer (7) in the circumferential direction and radially rests on the bearing layer (7) and the insulating layer (8).

5. Exhaust gas treatment device according to any of claims 1 to 4,
**characterised in that**
a vapour barrier layer (11) is arranged radially between the insulating layer (8) and the casing (3), which barrier layer encloses the insulating layer (8) in the circumferential direction and by means of which the insulating layer (8) radially rests on the casing (3).

6. Exhaust gas treatment device according to any of claims 1 to 5,
**characterised in that**
the insulating material is a microporous solid material.

7. Exhaust gas treatment device according to any of claims 1 to 6,
**characterised in that**
the insulating bodies (12) that are adjacent to each other in the circumferential direction overlap in the circumferential direction.

8. Exhaust gas treatment device according to any of claims 1 to 7,
**characterised in that**
the insulating bodies (12) have at least one circumferential step (14) in their axial extension, insulating bodies (12), having the circumferential steps (14), which are adjacent in the circumferential direction overlapping in the circumferential direction.

9. Exhaust gas treatment device according to any of claims 1 to 8,
**characterised in that**
the insulating layer (8) or the respective insulating body (12) according to claim 7 is radially surrounded on the outside and the inside by a vapour barrier layer.

10. Exhaust gas treatment device according to any of claims 1 to 9,
**characterised in that**
the insulating layer (8) or at least one of the insulating bodies (12) according to claim 7 is fixed to the casing (3) axially and/or in the circumferential direction.

11. Exhaust gas treatment device according to any of claims 1 to 10,
**characterised in that**
a protective ring (21) is arranged on at least one end of the axial of the insulating layer (8) and rests radially on the bearing layer (7) and the casing (3) and axially on the insulating layer (8).

12. Exhaust gas treatment device according to any of claims 1 to 11,
**characterised in that**
the casing (3) has an annular step (24) on at least one axial end of the insulating layer (8), which step rests radially on the bearing layer (7).

## Revendications

1. Dispositif de traitement de gaz d'échappement pour une installation de gaz d'échappement d'un moteur à combustion interne, en particulier d'un véhicule automobile, comprenant :
- un boîtier (2) dont la chemise (3) renferme un espace récepteur (5) dans la direction circonférentielle,
- au moins un élément de traitement de gaz d'échappement (6), qui est aménagé dans l'espace récepteur (5),
- une couche d'appui (7) formée d'un matériau antifriction élastique, qui enserre le au moins un élément de traitement de gaz d'échappement (6) dans la direction circonférentielle et s'applique radialement sur le au moins un élément de traitement de gaz d'échappement (6),
- une couche isolante (8) formée d'un matériau isolant thermique résistant à la pression, qui enserre la couche d'appui (7) dans la direction circonférentielle à l'intérieur de la chemise (3),
- dans lequel la couche isolante (8) est conçue pour résister à la pression et transfère des forces de pression orientées radialement entre la chemise (3) et la couche d'appui (7), que la couche d'appui (7) fait passer au au moins un élément de traitement de gaz d'échappement (6),
**caractérisé en ce que** :
la couche isolante (8) présente plusieurs corps isolants (12) qui se succèdent dans la direction circonférentielle et s'étendent respectivement sur une section circonférentielle.

2. Dispositif de traitement de gaz d'échappement selon la revendication 1,
**caractérisé en ce que** :
la couche isolante (8) est supportée indirectement via une couche intermédiaire souple à la flexion (10) ou directement sur la couche d'appui (7).

3. Dispositif de traitement de gaz d'échappement selon la revendication 1 ou la revendication 2,
**caractérisé en ce que** :
la couche isolante (8) est supportée indirectement via une couche intermédiaire souple à la flexion (10) ou directement sur la chemise (3).

4. Dispositif de traitement de gaz d'échappement selon l'une quelconque des revendications 1 à 3,
**caractérisé en ce que** :
radialement entre la couche d'appui (7) et la couche isolante (8) est aménagée une couche barrière à la vapeur (11) qui enserre la couche d'appui (7) dans la direction circonférentielle et s'applique radialement autant sur la couche d'appui (7) que sur la couche isolante (8).

5. Dispositif de traitement de gaz d'échappement selon l'une quelconque des revendications 1 à 4,
**caractérisé en ce que** :
radialement entre la couche isolante (8) et la chemise (3) est aménagée une couche barrière à la vapeur (11) qui enserre la couche isolante (8) dans la direction circonférentielle et via laquelle la couche isolante (8) s'applique radialement sur la chemise (3).

6. Dispositif de traitement de gaz d'échappement selon l'une quelconque des revendications 1 à 5,
**caractérisé en ce que** :
le matériau isolant est un matériau solide microporeux.

7. Dispositif de traitement de gaz d'échappement selon l'une quelconque des revendications 1 à 6,
**caractérisé en ce que** :
les corps isolants (12) voisins dans la direction circonférentielle se chevauchent mutuellement dans la direction circonférentielle.

8. Dispositif de traitement de gaz d'échappement selon l'une quelconque des revendications 1 à 7,
**caractérisé en ce que** :
les corps isolants (12) présentent dans leur extension axiale au moins un gradin circonférentiel (14), dans lequel les corps isolants (12) voisins dans la direction circonférentielle se chevauchent avec les gradins circonférentiels (14) dans la direction circonférentielle.

9. Dispositif de traitement de gaz d'échappement selon l'une quelconque des revendications 1 à 8,
**caractérisé en ce que** :
la couche isolante (8) ou le corps isolant respectif (12) selon la revendication 7 est entouré(e) radialement à l'extérieur et à l'intérieur par une couche barrière à la vapeur.

10. Dispositif de traitement de gaz d'échappement selon l'une quelconque des revendications 1 à 9,
**caractérisé en ce que** :
la couche isolante (8) ou au moins l'un des corps isolant (12) selon la revendication 7 est fixé(e) sur la chemise (3) axialement et/ou dans la direction circonférentielle.

11. Dispositif de traitement de gaz d'échappement selon l'une quelconque des revendications 1 à 10,
**caractérisé en ce que** :
sur au moins une extrémité axiale de la couche isolante (8) est aménagé un anneau de protection (21) qui s'applique radialement sur la couche d'appui (7) et sur la chemise (3) et axialement sur la couche isolante (8).

12. Dispositif de traitement de gaz d'échappement selon l'une quelconque des revendications 1 à 11,
**caractérisé en ce que** :
la chemise (3) présente sur au moins une extrémité axiale de la couche isolante (8) un gradin annulaire (24) qui s'applique radialement sur la couche d'appui (7).
